Europäisches Patentamt

European Patent Office

Office européen des brevets

(19)

(11) Publication number: **0 033 595**

**A1**

(12) # EUROPEAN PATENT APPLICATION

(21) Application number: **81300163.3**

(22) Date of filing: **14.01.81**

(51) Int. Cl.³: **G 03 B 27/54**

(30) Priority: **05.02.80 GB 8003877**
**22.10.80 GB 8034097**
**24.11.80 GB 8037635**

(43) Date of publication of application:
**12.08.81 Bulletin 81/32**

(84) Designated Contracting States:
**AT BE CH DE FR GB IT LI LU NL SE**

(71) Applicant: **Denner, James Railton**
**Avenue House 26 Charlton Road**
**Shepton Mallet Somerset(GB)**

(72) Inventor: **Denner, James Railton**
**Avenue House 26 Charlton Road**
**Shepton Mallet Somerset(GB)**

(74) Representative: **Harrison, David Christopher et al,**
**MEWBURN ELLIS & CO 70 & 72 Chancery Lane**
**London WC2A 1AD(GB)**

(54) **Camera.**

(57) A graphic arts camera has its copy-holder table (6) illuminated solely by light reflected by mirrors (8). The mirrors (8) are concave in both the vertical and horizontal directions whereby the table (6) is illuminated evenly but non-uniformly, with a greater amount of light incident on the edges and corners of the table than on its centre. The mirrors may be formed of metal sheets with wing panels (10, 11, 12, 13) set at an angle to a centre panel (9), and corner panels (18, 19, 20, 21) on the side wing panels. For fine adjustment removable and/or slideable control elements of different reflectivity may be placed on the surface of one or more of the panels. A photographic material holder (3) is disclosed wherein a foraminate lower surface to which the material is held is sealed off except only where the material is held to it, by a floppy pad (32) overlying the surface and acting as a self-compensating valve.

Fig.1.

1.

CAMERA

This invention relates to cameras for graphic arts. In this context the term "camera" and "enlarger" are synonymous.

The present invention is concerned primarily with the problem of light distribution on the copy-holder table, that is to say the surface at which there is supported the image-bearing copy material such as art work of which a photographic record such as a half-tone colour separation record is to be made.

I wish to illuminate this material evenly, that is to say without spots, lines or shadows, but non-uniformly. This non-uniformity is to compensate somewhat for the characteristics of the objective lens through which light emanating from the copy will pass to the photographic material. The lens tends to be more transmissive of light travelling along and close to its optical axis. To compensate, I wish to provide slightly more light at the edges of the table than at the centre, especially, when the table is rectangular, at the pair of edge portions which are more remotely spaced from the centre of the table and at its corners.

Conventionally, lamps are mounted on or to the table itself and point towards its centre to shine onto its surface. They are conventionally placed at or adjacent

2.

the minor edges of a rectangular table and I have proposed previously that they might be mounted at the diagonal corners of such a table.

However this places the lamps undesirably close to the table so that there is difficulty in achieving the desired evenness of lighting; and since all the lamps are directed towards the centre of the table it is virtually impossible to achieve the favouring of the edges of the table which I desire. Furthermore the closeness of the lamps to the table increases the risks of "hot spots" or hard lines being formed.

Furthermore it has been proposed in UK Patent No. 662600 to increase the effective distance between light sources and table by illuminating the latter substantially entirely by reflection from plane mirrors mounted on the side walls of the camera body; the object there is to achieve uniformity of illumination of the table.

I have now discovered that particularly effective control of non-uniform light intensities across the copy-holder may be achieved by increasing the effective distance of the lamps from the copy-holder table without to the same extent increasing the size of the camera as a whole by directing the lamps towards mirrors or other reflecting surfaces (hereinafter "mirrors") which are concave both in the horizontal and vertical direction and which are arranged to redirect the light back onto the table and to give controlledly enhanced illumination at edges of the table. For a fixed focus camera the lamps may be removed entirely from the table and mounted to the static body of the camera adjacent the objective lens of the camera.

For a variable focus camera the lamps and mirrors may be mounted on the copyholder.

The lamps and mirrors may in either case be free-standing on an independent stand, either fixedly or arranged so as to move with the copy holder.

I prefer not to use a conventional arcuately concave mirror but rather to use a panelled mirror having at least five panels which are angled to each other (and the angular relationship of which to each other may be adjustable). Furthermore the whole of the mirror may be tiltable to follow movements of the copy holder as a function of magnification or of focal length.

Additional controllability can be provided by providing, on at least one of the mirrors, one or more control elements movable and/or removable with respect to the mirrors, enabling a user to cover up a chosen part of a mirror with the element. The elements have a different reflective power from the area of the mirror which they cover up, or at least from a part of that area. Because the elements are moveable and/or removable the reflective characteristics of the mirrors can be adjusted very easily by an operator.

In one embodiment the central panel of the mirror is largely specular, and a slideable control element which is mountable to lie against it and cover up a part of it is diffusely reflective. The element can slide from side to side on the mirror, so as to allow the amount of the central panel remaining uncovered at each side of the element to co-vary. This allows the front or the back of the table to be favoured one relative to the other. The favouring of the back or the front can be used to compensate for differences in reflective power between the various things surrounding the camera. In particular the back board of a camera running between the table and the camera head is usually matt black, while the clothes of the operator standing at the front of the camera may be pale or white. This will result in slightly bettwe illumination of the front of the table than the back. By sliding the element towards the front of the table the uncovered specular portion of the central section of the mirror reflecting onto the front edge of the table is reduced, and the equivalent portion reflecting onto the back edge of the table is increased, compensating for the differential illumination described above.

This also allows for dissimilar lamp outputs, variations in the reflectivity of the reflectors behind the light sources, or manufacturing variations in the units to be compensated for.

In the accompanying drawings:

Fig. 1 is a diagrammatic elevation of a fixed-focus camera embodying the present invention,

Fig. 2 is an equally diagrammatic plan view,

Fig. 3 is a face view of a second mirror assembly,

Fig. 4 is a section along line IV - IV of Fig. 3,

Fig. 5 is a diagrammatic front view of a second camera embodying the present invention, and

Fig. 6 is a diagrammatic section through a photographic material holder.

In the first embodiment a camera body 1 has a camera head 2 within which there is positioned a holder 3 for photographic material. The holder will be described in more detail later. A bellows 4 supports an objective lens 5 and there is a copy-holder table 6 extending perpendicular to the optical axis of the lens 5. The table is movable along that optical axis in accordance with the magnification desired from a lens of given focal length.

To illuminate material such as art work supported on the copy-holder table 6 lamps 7 are mounted in pairs, one pair on each side of the camera head 2 and directed outwardly away from the axis of the lens 5 and downwardly towards mirror assemblies 8 statically supported on the body 1 at the same side of the axis, respectively. These mirror assemblies do not move with the table but are adjustable in a way which will be described later. Sills 15 prevent light from travelling directly from the lamps 7 to the table.

Each mirror assembly 8 consists of a central reflecting panel 9 top and bottom wing panels 10 and 11 side wing panels 12 and 13 and corner panels 18, 19, 20 and 21. The whole assembly may be pivotable about a horizontal axis so that light reflected by them from the lamps 7 respectively will generally follow movements of the table 6 along the optical axis of the lens 5. Such adjustments may be manually by means of for example a micrometer screw, set in accordance with the magnification at which the camera is being operated, or may be effected automatically by a drive linked to movement of the table.

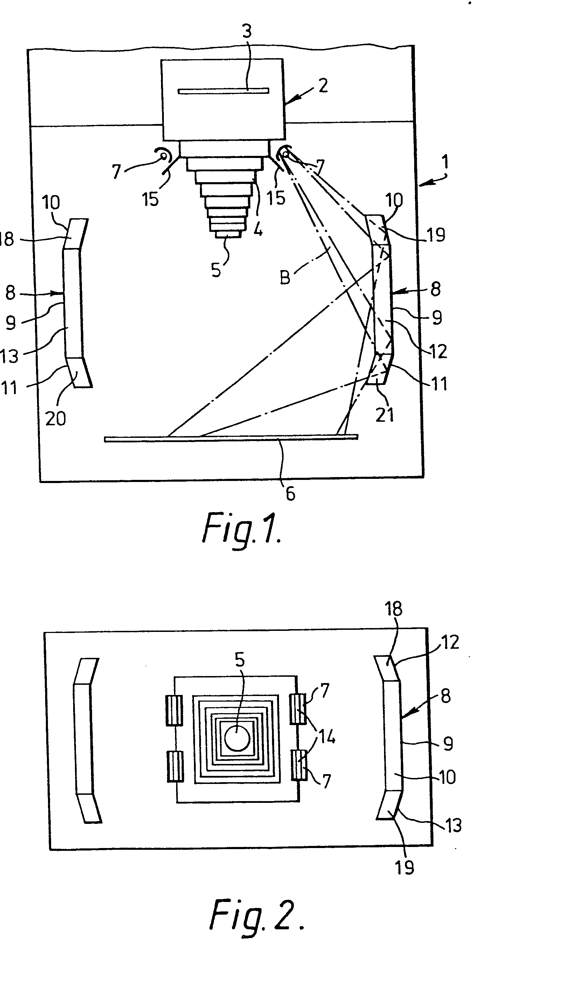

To control the distribution of the light reaching the copy holder the angle between the central panel 9 and each of the other panels can be individually adjusted. This will normally be set as a matter of factory adjustment but adjustment by the user for special conditions is of course possible. Reflectors 14 behind the lamps 7 are also angularly adjustable and are set such that light reflected from their upper portions (a common channel reflector could be provided for each pair) is reflected from the intersection of the top wing 10 with the centre panel 9. That reflected from the top of panel 9 is directed towards the centre and further edge of the table 6 and that from the lower part of the panel 10 towards the near edge, see for example the ray labelled A in Fig. 1. The angle of the panel 11 is such that light incident from the 'lower portion of the reflector 14 and directed to the intersection between the centre panel 9 and the bottom panel 17 is reflected from the top of the panel 11 towards the centre and further edge of the table and from the bottom of panel 9 to the nearer edge of the table this being seen for example in the ray labelled B.

The effect of this is to provide controlledly (e.g. 15 to 50%) dependent on the angle of view of the lens greater intensity of light at the minor two edges of the rectangular copy-holder table than towards the centre but with a gradual and continuous shading and with the absence of hard lines or hot spots. These latter will be particularly effectively avoided if the lamps 7 are so- called long-filament lamps mounted with these axes parallel to that of the channel reflector 14 i.e. parallel to the minor axis of the table 6. To achieve a similar effect of greater intensity towards the major edges of the copy-holder table, side panels 12 and 13 are set to reflect from the more adjacent reflector 14 towards the more adjacent major edge of a copy holder. Panels 10, 11, will preferably be wider than panels 12, 13 (e.g. 10 cm as against 6 cm).

Further fine adjustment of the contribution of light on the copy holder can be given by treating the upper and lower wing panels 10 and 11 at their central portions by the application of a matt white coating as a diffusing reflector thereby further favouring the tendency towards corner illumination, while the free edges both of these panels and of wing panels 12 and 13 may have applied to them intermittent patterns such as solid V's of similar matt diffusing material so as to lessen any tendency for the formation of hard lines resulting from reflection at those edges. This will be discussed more fully later.

In some cases where there is a wide range of travel of the copy holder it may be necessary for the mirror assemblies to move with, or in conjunction with, the copy-holder.

The primary reflector 14 placed around the actual lamp causes two distinct beams, one from each side of the tubular lamp 7. The dimensions of the mirror and its distance from the light source is such that one beam, A, hits the upper wing panel and adjacent on the central panel 9 and the other, B, falls on the lower wing panel and adjacent on the central panel 9. I found this a little difficult to control due to manufacturing variation in the reflectors 14, and reached the conclusion that it is preferable that specular reflection should be permitted from one beam only. My preference is that these shall be from the upper beam. The embodiment of mirror assembly to be described is for that purpose.

The mirror assembly 8 has corner panels 18, 19, 20, 21 which in this case are joined to the side panels 12, 13 and are angled further inwards relative to them. These allow further fine control of the distribution of light.

The bottom edge of the bottom panel 11 is turned up to make a small lip 22. Removably resting in the lip 22 is a slideable control element 23 which extends upwards to the top of the central reflective panel 9 but which is not as wide as the central panel 9 and the bottom panel 11. The slideable element 23 is bent so that it lies against the bottom panel 11.

The panels 9 to 13 and 18 to 21 are preferably made by cutting and bending a single rectangular piece of stainless steel or other specular material (though hinged rigid panels of mirror glass could be used). Corner panels 18, 19 are separated from panel 10 and panels 20, 21 from panel 11 by respective V-shaped cuts. The angle of bend at A-A' may be of the order of 17° and at B-B' of the order of 10°. Angles of bend at C-C' may be of the order of 12°.

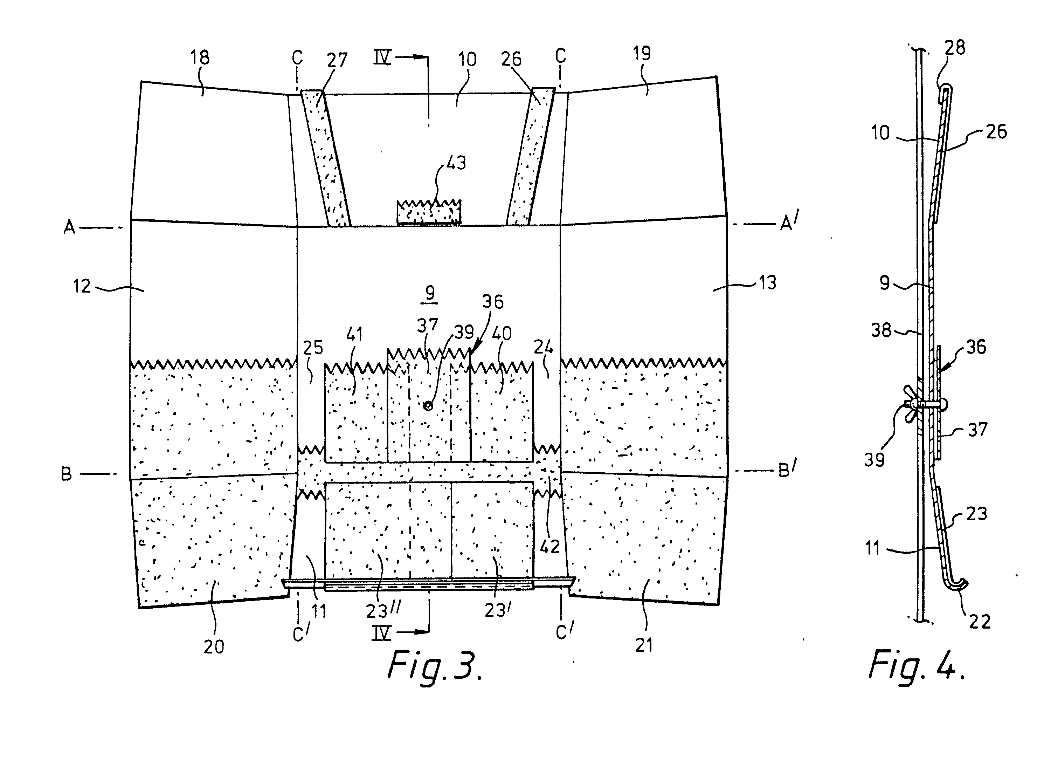

The reflective surface of the panels is partly covered by a matt white coating in a manner similar to that described above. This may be permanent and/or due to moveable elements. Both are exemplified in the embodiment seen in Figs 3 and 4.

The surface of the central panel 9 and lower panel 11 is entirely or mostly specular. The exposed surface of the slidable element 23 and of composite element 36 is covered with a matt white coating which has a serrated edge. The reflective effect of the central panel 9 can be adjusted by selection of the size of element 36 and/or by sliding it so as to alter the relative sizes of the specular strips 24, 25 which are not covered by it.

The composite element 36 has a central portion 37

11.

drawn towards a mounting plate 38 of the assembly by nut and bolt 39. Entrapped between portion 37 and the panel 9 are two wing elements 40, 41 which can be adjustably positioned horizontally or vertically, symmetrically or otherwise, and be held by tightening of the nut and bolt 39. Also, panel 23 may be made up of two mutually overlappable portions 23', 23" Fig. 3.

Adjustments of the reflective power of the top wing 10 can be effected by use of two smaller removable and slideable control elements 26, 27. These panels are supported by hook portions 28 at their upper ends, which fit over the top edge of the top wing 10. There is also a small, fixed, generally rectangular diffusing area 43 helping to eliminate over-lighting at the corners due to overlap between light emanating from respective paired sources 7. Area 43 can be made adjustable in terms of height and width as described above.

In order to show the relative positions of the items more clearly in Fig. 4, thicknesses of material have been exaggerated and gaps are shown where in fact the pieces would touch each other.

The elements 23, 26, 27 may be of aluminium sheet. The whole mirror assembly, including the elements 23, 26, 27, is then cheap, light in weight and easy to adjust.

In principle adjustments could be made by the use of elements which are either more reflective or less reflective than the part of the mirror assembly which they cover up.

Furthermore the number of panels can be greater or fewer than the nine particularly described above, with side and/or top and bottom panels comprising a number of angled strips or facets.

The embodiment also shows the application of a permanent diffusion surface to the mirror surface. Matt white paint is applied with a serrated edge to cover panels 20, 21, to about halfway up wing panels 12, 13 and at 42 on each side of the fold line between panels 9 and 11. It is the function of the wing panels to throw light along the whole of the edges of the copyboard and varying the height of the diffusion material can vary the amount of light falling in the central part of these edges. Therefore, there may yet be a case in practice for making these diffusion elements adjustable in an upward and downward direction, but in practice this has not yet been found necessary.

The folds in the stainless steel mirror are positioned so that some light spills just beyond the furthermost limit of the area to be illuminated, and some falls just short of the commencing area. This is necessary to provide manufacturing tolerance, and it follows, therefore, that the area adjacent to the horizontal folds of the reflectors make no specular contribution to the light falling on the copy-holder table.

The addition of white diffusing material along such horizontal folds B-B' will tend to increase the illumination by virtue of diffused light falling generally rather than specular light falling where it is not required. However, the percentage gain of light from this source is so small that it is generally not worth taking action to correct for its sake alone. However, the purpose of the strip 42 along the fold B-B' is to augment the presence of the moveable deflectors and to avoid the revealing of an undesirable horizontal strip of specular reflecting mirror which may be uncovered according to the manner of their adjustment.

As the lower wing panels tend to affect the adjacent corners and edges of the copy-holder table more so than the upper ones, it will follow that this provides a means of controlling the light at the front and back adjacent to the nearest corners, and to a lesser extent the centre and far corners. No upward or downward movement of these deflectors is envisaged as being necessary, unless one day substantial increase in brilliance is required.

Upward or downward adjustment of the three plates of the composite element 36 will vary the illumination along a centre line from front to back of the table 6 whilst differential upward or downward adjustment of any of these plates will make correction possible for any design of lens and camera in this central area of the table.

I can also adjust the distribution of light across the table 6 by altering the angle of the reflectors 14 behind the light sources 7 about a horizontal axis. If the angle is altered so as to tilt the reflector upwardly proportionally more light falls on an upper wing panel 10 of a mirror 8 and, surprisingly, the intensity of light on the copy-holder is relatively increased on its near side, i.e. nearer to the mirror involved. If the angle is altered so as to tilt the reflector downwardly proportionally more light falls on the lower wing panel 11 of the mirror 8 and intensity of light on the copy holder is relatively increased in the zone farthest from that mirror 8.

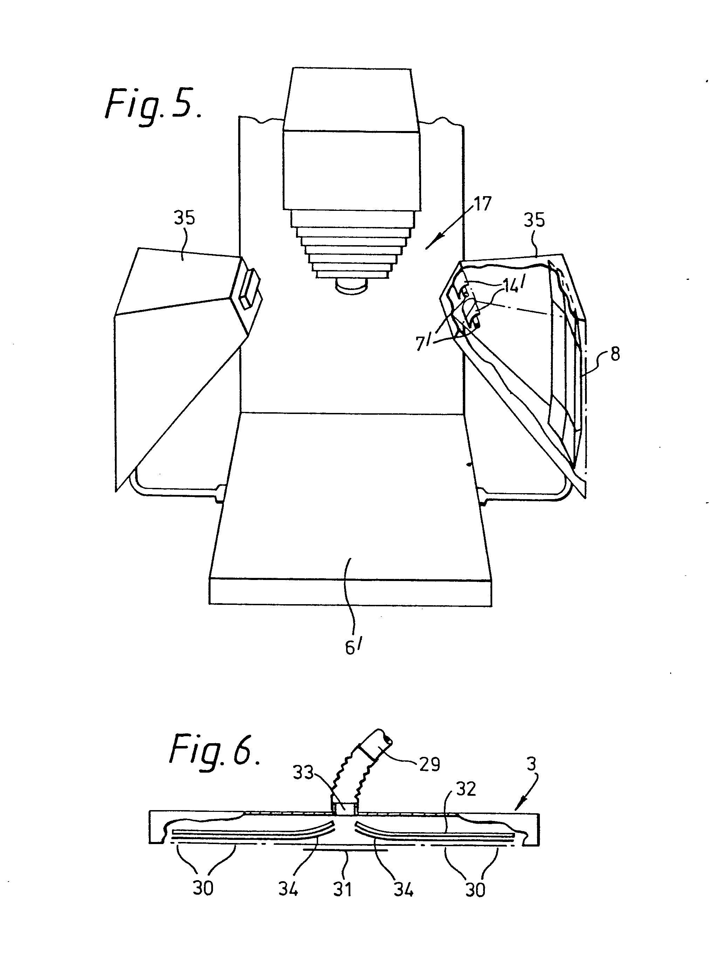

In a second embodiment of camera, seen in Fig. 5, I show specifically a variable focus camera 17. Here, the desirable features of control of intensity and distribution of light are achieved as in the first embodiment by illuminating the copy-holder substantially solely by reflected light reflected from mirror assemblies 8 as described, this outweighing the disadvantage of mounting the lamps 7' their reflectors 14' and mirrors, which are identical in principle with those of the first embodiment, in housings 35 on the copy-holder 6' to move with it. Reflectors 14' are adjustable as to their angle, as before.

An improvement is also provided in the holder used in these, or other, cameras for holding the photographic material.

As seen in Fig 6 this holder 3 is generally in the form of a hollow box to which reduced pressure is applied through a wide duct 29. Conventionally the box 3 would be empty and all of a large number of apertures 30 regularly distributed over its lower surface would be open to atmosphere except only where they are covered by a sheet 31 of photographic material. Leaving a large number of such apertures exposed obviously reduces the effect of a given application of vacuum to the photographic material and in order to increase the effectiveness of that vacuum without however incurring the penalty of a more powerful pump or higher flow rates I place within the box a pad 32 of comparatively floppy foam material such as polyurethane foam, which effectively fills the box when relaxed, but is shown for clarity as a comparatively thin sheet. In the centre adjacent the inlet of the duct 29 there is an aperture 32 and underlying the foam is an impermeable sheet 34 such as a sheet of polyethylene. An aperture registering with aperture 33 is provided in that also. The effect is that of a floppy valve. This will lift progressively from the centre as a result of the presence of an obstruction such as photographical material 31, but will lift no further than the next adjacent apertures 30 which are beyond the edge of that material. At least substantial sealing off of the remainder of the apertures due simply to the pressure applied by the floppy spongy pad 32 onto the sheet 34 causes concentration of the application of reduced pressure to the area where it is needed, namely to the photographic material.

It need hardly be made explicit that suitable mirrors and if necessary light sources may be applied to a pre-existing camera to convert it to one according to the invention.

When the light sources and/or mirrors (whether integral or added as a conversion) are free-standing housings containing them, such as housings 35 of Fig. 5, may be supported either fixedly or for movement with the copyholder on stands the feet of which rest on any suitable support adjacent to the camera.

The mirrors need not be metallic.

CLAIMS

1. A graphic arts camera wherein a copy-holder table (6) is illuminated substantially wholly by light from light sources (7, 7') reflected from mirrors (8) characterized in that to achieve a non-uniform distribution of light which favours edges of the table the mirrors (8) are concave in both the vertical and the horizontal directions.

2. A graphic arts camera according to Claim 1 wherein the light sources (7. 7') are positioned in respective sides of the optical axis of the camera to direct light away from that axis towards mirrors (8) respectively on the same side of the axis.

3. A graphic arts camera according to Claim 1 or Claim 2 wherein the mirrors (8) are angularly concave, having a planar centre panel (9) surrounded by wing panels (10 - 13) at an angle to it.

4. A graphic arts camera according to Claim 3 wherein the mirrors (8) have additionally corner panels (18-21) at an angle to the wing panels (10-13).

5. A graphic arts camera according to Claim 2, 3 or 4 wherein the mirror (8) is formed from a single reflective sheet.

6. A graphic arts camera according to any one of the preceding claims wherein the light sources (7,7') are backed by a channel reflector or reflectors (14, 14') with the axis of the channel horizontal.

7. A graphic arts camera according to Claim 6 wherein the reflectors are angularly adjustable.

8. A graphic arts camera according to Claim 6 or 7 wherein the light sources are long-filament electric lamps.

9. A graphic arts camera according to any one of the preceding claims wherein there are additionally control elements (23, 26, 27) of a reflectivity different from that of the mirrors (8) mounted on the mirrors (8).

1C. A graphic arts camera according to any one of the preceding claims wherein a holder (3) for photographic material in the camera is a suction box having a foraminate lower face (18) and a floppy material (32, 34) lying over the face within the box.

Fig.1.

Fig.2.

0033595

1/3

Fig. 3.

Fig. 4.

2/3

0033595

Fig.5.

Fig.6.

# EUROPEAN SEARCH REPORT

**European Patent Office**

| | DOCUMENTS CONSIDERED TO BE RELEVANT | | CLASSIFICATION OF THE APPLICATION (Int Cl.3) |
|---|---|---|---|
| Category | Citation of document with indication, where appropriate, of relevant passages | Relevant to claim | |
| | US - A - 4 185 914 (HOLTHUSEN) + Fig. 1,2 + | 2,4 | G 03 B 27/54 |
| | US - A - 4 131 362 (GANDINI) + Fig. 1,2 + | 1,5 | |
| | US - A - 4 103 991 (KRAMER) + Fig. + | 3 | |
| | US - A - 4 099 865 (KNIPPENBERG) + Fig. 1-6; column 4, lines 15-19 + | 10 | **TECHNICAL FIELDS SEARCHED (Int. Cl.3)** G 03 B 27/00 G 03 G 15/00 |
| | US - A - 4 053 222 (GANDINI) + Fig. 1-3; column 3 + | 1,5 | |
| | US - A - 3 947 115 (HAMAGUCHI) + Fig. 3 + | 3,5,8 | |
| | US - A - 3 807 856 (RODRIGUEZ) + Fig. 2,3 + | 8 | |
| | ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 08-05-1981 | KRAL |

EPO Form 1503.1   06.78